# EUROPÄISCHE PATENTSCHRIFT

(11) **EP 1 747 942 B1**
(45) Veröffentlichungstag und Bekanntmachung des Hinweises auf die Patenterteilung: **26.08.2009**
(21) Anmeldenummer: 06015416.8
(22) Anmeldetag: 25.07.2006
(51) Int. Cl.: B60R 21/01

(54) **Gurtstraffungssystem für ein Kraftfahrzeug und Sicherheitssystem mit einem solchen Gurtstraffungssystem**
Seat belt pretensioner system for a motor vehicle and a safety system with such a pretensioner system
Système de prétensionneur de ceinture pour un véhicule automobile et un système de sécurité avec un tel prétensionneur de ceinture

(30) Priorität: 30.07.2005 DE 102005035861
(43) Veröffentlichungstag der Anmeldung: 31.01.2007
(73) Patentinhaber: GM Global Technology Operations, Inc., Detroit, MI 48265-3000 (US)
(72) Erfinder: Bauer, Klaus, 55545 Bad Kreuznach (DE); Hesse, Simon, 67593 Westhofen (DE); Kettern-Kohler, Horst, 74722 Buchen (DE); Rick, Ulrich, 55595 Roxheim (DE)
(74) Vertreter: Strauss, Peter

(56) Entgegenhaltungen:
- EP-A- 1 493 633
- WO-A-99/51469
- GB-A- 2 372 862
- US-A1- 2004 080 204
- US-A1- 2004 182 630

## Beschreibung

Die vorliegende Erfindung betrifft ein Gurtstraffungssystem für ein Kraftfahrzeug mit mindestens zwei separaten Gurtstraffungseinrichtungen zur reversiblen Straffung separater Sicherheitsgurte. Die vorliegende Erfindung betrifft ferner ein Sicherheitssystem für ein Kraftfahrzeug mit einem solchen Gurtstraffungssystem.

Aus dem Stand der Technik sind unterschiedliche Sicherheitsanordnungen für Kraftfahrzeuge bekannt. Diese umfassen regelmäßig einen Aufwickelmechanismus zum automatischen Aufwickeln eines Sicherheitsgurtes um eine Gurtspule. Durch das automatische Aufwickeln wird erreicht, dass der angelegte Sicherheitsgurt locker und komfortabel in einer Normalstellung an dem Körper des Fahrzeuginsassen anliegt und bei Nichtgebrauch des Sicherheitsgurtes um die Gurtspule aufgerollt ist. Das Abwickeln des Sicherheitsgurtes ist bei angelegtem Sicherheitsgurt leicht möglich, so dass die Bewegungsfreiheit des Fahrzeuginsassen gewährleistet ist.

Ferner sind bei den bekannten Sicherheitsanordnungen so genannte Gurtstraffer vorgesehen. Die Gurtstraffer bewirken eine Straffung des Sicherheitsgurtes in eine zweite Stellung, um den Fahrzeuginsassen in Richtung der Rückenlehne des Fahrzeugsitzes zu ziehen und die Gurtlose zu entfernen, so dass die Verletzungsgefahr im Falle eines Zusammenpralls des Fahrzeuges mit einem anderen Fahrzeug oder einem Verkehrshindernis verringert ist. Die bekannten Gurtstraffer können dabei in irreversible und reversible Gurtstraffer unterteilt werden. Der irreversible Gurtstraffer wird erst dann aktiviert, wenn es bereits zu einem Unfall, wie beispielsweise einem Zusammenprall mit einem anderen Fahrzeug gekommen ist. Crashsensoren ermitteln den Zusammenprall und entsenden ein entsprechendes Aktivierungssignal an den irreversiblen Gurtstraffer. Die irreversiblen Gurtstraffer können stets nur einmal aktiviert bzw. ausgelöst werden. Die reversiblen Gurtstraffer sollen hingegen mehrmals, auch schnell hintereinander, auf Grund von Signalen ausgelöst werden können, die die Möglichkeit eines bevorstehenden Crashs andeuten. Das heißt, die reversiblen Gurtstraffer sollen immer dann aktiviert bzw. ausgelöst werden können, wenn ein Crash möglich oder wahrscheinlich ist, aber noch nicht stattgefunden hat bzw. festgestellt wurde.

Eine Gefahrensituation wird bei den reversiblen Gurtstraffern nicht durch Crashsensoren, die lediglich den tatsächlich stattgefundenen Crash ermitteln, sondern durch Fahrdynamiksensoren oder Umfeldsensoren ermittelt, die Informationen über den derzeitigen Bewegungszustand bzw. das Umfeld des Kraftfahrzeuges liefern. Hierzu gehört beispielsweise die Ermittlung der Längs-, Quer- und Vertikalbeschleunigung des Kraftfahrzeuges. Sollten diese gemessenen Werte einen Grenzwert überschreiten, so erfolgt die prophylaktische Aktivierung des reversiblen Gurtstraffers. Sollte der Grenzwert wieder unterschritten werden und tatsächlich kein Crash stattgefunden haben, so wird der reversible Gurtstraffer wieder deaktiviert, so dass der Sicherheitsgurt wieder in seine Normalstellung gebracht werden kann, in der dem Fahrzeuginsassen eine größere Bewegungsfreiheit eingeräumt ist. Bei der nächsten kritischen Fahrsituation bzw. Gefahrensituation ist es möglich, den reversiblen Gurtstraffer erneut zu aktivieren.

Die DE 199 61 799 B4 beschreibt ein Sicherheitsgurtsystem mit einem reversiblen Gurtstraffer. Der bekannte reversible Gurtstraffer verfügt über einen elektromotorischen Antrieb, der in Abhängigkeit von einer aus Sensorsignalen abgeleiteten Wahrscheinlichkeit einer Unfallsituation den Sicherheitsgurt in eine Sicherheitszwischenstellung mit einer bestimmten Zugkraft reversibel vorspannt. Der Aufbau der Steuerungseinrichtung ist nicht näher erläutert.

Die DE 103 32 024 A1 beschreibt ein Verfahren zur Ansteuerung eines reversiblen Gurtstraffers zum Lösen einer von einem Beschleunigungssensor aktivierbaren Gurtauszugssperre eines Rückhaltegurts in einem Kraftfahrzeug. Als Lösezeitpunkt für die Gurtauszugssperre ist ein Zeitpunkt festgelegt, zu dem die erfasste Beschleunigung einen Beschleunigungsschwellwert unterschreitet. Der reversible Gurtstraffer selbst wird wiederum auf Grund einer ermittelten Gefahrensituation aktiviert, d.h. bei Feststellung einer Gefahrensituation wird der Gurtstraffer ausgelöst. Aufbau und Anordnung der Steuerungseinrichtung ist auch hier nicht näher beschrieben.

Die DE 102 30 483 A1 beschreibt ein Verfahren zur Ansteuerung eines zweistufigen irreversiblen Gurtstraffers. Bei dem bekannten Verfahren wird die Längsbeschleunigung des Kraftfahrzeuges erfasst und einer Integration unterzogen, wobei das Integral der Beschleunigung mit einer Auslöseschwelle verglichen wird. Ist diese Auslöseschwelle überschritten, wird eine Gefahrensituation festgestellt und der irreversible Gurtstraffer ausgelöst. Bei dem bekannten Verfahren wird vorgeschlagen, ein Steuergerät zur Ansteuerung des Gurtstraffers zu verwenden, wobei gleichzeitig mit dem Gurtstraffer auch ein Knieairbag angesteuert werden soll.

Die DE 103 45 726 A1 beschreibt ein Rückhaltesystem zum Zurückhalten eines Insassen in einem Fahrzeug. Das bekannte Rückhaltesystem verfügt über einen reversiblen Gurtstraffer, der über ein Steuergerät gesteuert wird. Das Steuergerät steht mit einer Fahrzeugsituations-Erfassungseinrichtung zum dynamischen Erfassen von Fahrzeugsituationsdaten, wie beispielsweise der Querbeschleunigung des Fahrzeuges, und einer Insassen-Parameter-Erfassungseinrichtung zum dynamischen Erfassen von Insassen-Parameter-Daten, wie beispielsweise dem Gewicht des Insassen, in Verbindung. Der Gurtstraffer wird in Abhängigkeit von den ermittelten Fahrzeugsituationsdaten, an Hand derer festgestellt wird, ob eine Gefahrensituation vorliegt, und den ermittelten Insassen-Parameter-Daten gesteuert. Neben dem Gurtstraffer ist das Steuergerät auch mit einer Sitzverstellung verbunden, so dass auch der Sitz im Falle eines Crashs verstellt werden kann, um den Überlebensraum in dem Kraftfahrzeug zu vergrößern.

Die WO 98/37488 beschreibt ein Sicherheitssystem für Kraftfahrzeuge, bei dem eine übergeordnete Steuerungseinheit vorgesehen ist, die in einer Gefahrensituation einzelne Controller von Sicherheitseinrichtungen, wie beispielsweise Gurtstraffungseinrichtungen, Airbageinrichtungen o. ä., ansteuert.

Ein weiteres Gurtstraffungssystem ist aus der US 2004/0182630 bekannt. Das Gurtstraffungssystem weist zwei separate Gurtstraffungseinrichtungen zur Straffung zweier separater Sicherheitsgurte auf, wobei die Gurtstraffungseinrichtungen jeweils eine Antriebseinheit aufweisen. Ferner ist eine gemeinsame Steuerungseinrichtung für die zwei Gurtstraffungseinrichtungen vorgesehen.

Das vorgenannte bekannte Gurtstraffungssystem hat sich in der Praxis bewährt, ist jedoch insofern von Nachteil, als dass sich der Einbau desselben in das Kraftfahrzeug schwierig gestaltet, was u. a. auf die geringe Flexibilität bei der Anordnung zurückzuführen ist. Darüber hinaus ist der Aufwand, der zur Vernetzung der Komponenten der Anordnungen erforderlich ist, sehr hoch.

Der Erfindung liegt daher die Aufgabe zu Grunde, ein Gurtstraffungssystem für ein Kraftfahrzeug mit mindestens zwei separaten Gurtstraffungseinrichtungen zur reversiblen Straffung separater Sicherheitsgurte zu schaffen, das einen geringeren Montageaufwand bedingt und ferner einen flexibleren Einbau ermöglicht. Der Erfindung liegt ferner die Aufgabe zugrunde, ein Sicherheitssystem mit einem solchen Gurtstraffungssystem zu schaffen, das die vorgenannten Vorteile aufweist.

Diese Aufgabe wird durch die in den Patentansprüchen 1 bzw. 11 angegebenen Merkmale gelöst. Vorteilhafte Ausführungsformen der Erfindung sind Gegenstand der Unteransprüche.

Das erfindungsgemäße Gurtstraffungssystem ist für ein Kraftfahrzeug konzipiert und weist mindestens zwei separate Gurtstraffungseinrichtungen zur reversiblen Straffung separater Sicherheitsgurte auf. Hier kann es sich beispielsweise um zwei Gurtstraffungseinrichtungen handeln, nämlich eine für den Sicherheitsgurt des Fahrers und eine für den Sicherheitsgurt des Beifahrers, es können jedoch auch die Sicherheitsgurte der Rücksitze mit entsprechenden Gurtstraffungseinrichtungen versehen sein. Die Gurtstraffungseinrichtungen weisen jeweils eine Antriebseinheit zur Straffung des Sicherheitsgurtes auf, wobei es sich bei den Antriebseinheiten beispielsweise um Elektromotoren handeln kann. Erfindungsgemäß ist eine gemeinsame Steuerungseinrichtung für die mindestens zwei Gurtstraffungseinrichtungen vorgesehen. Bei der Steuerungseinrichtung kann es sich beispielsweise um einen Rechner oder eine Steuerungselektronik mit entsprechendem Prozessor handeln. In jedem Fall kann durch die gemeinsame Benutzung einer Steuerungseinrichtung auf viele einzelne, den Gurtstraffungseinrichtungen zugeordnete Steuerungseinrichtungen verzichtet werden. Die geringere Anzahl der erforderlichen Bauteile führt somit zu einer Platzersparnis und zu einer Senkung der Gesamtkosten des Systems. Bei dem erfindungsgemäßen Gurtstraffungssystem ist die gemeinsame Steuerungseinrichtung ferner in eine Hauptgurtstraffungseinrichtung integriert, wobei die Hauptgurtstraffungseinrichtung eine der Gurtstraffungseinrichtungen ist.

Die Integration der gemeinsamen Steuerungseinrichtung in eine der Gurtstraffungseinrichtungen erleichtert zum einen den Einbau der Steuerungseinrichtung, die gemeinsam mit der Hauptgurtstraffungseinrichtung erfolgt, zum anderen ist die Steuerungseinrichtung bereits unmittelbar bei einer der Gurtstraffungseinrichtungen, nämlich der Hauptgurtstraffungseinrichtung, angeordnet, so dass hier auf eine lange Verkabelungstrecke o. ä. verzichtet werden kann.

In einer vorteilhaften Ausführungsform des erfindungsgemäßen Gurtstraffungssystems weist die Hauptgurtstraffungseinrichtung ein Gehäuse auf, wobei die gemeinsame Steuerungseinrichtung in dem Gehäuse angeordnet ist. So ist das Gehäuse der Hauptgurtstraffungseinrichtung, das die Antriebseinheit aufnehmen oder auch an dieser befestigt sein kann, zwar größer, die Gehäuse der anderen Gurtstraffungseinrichtungen können jedoch klein ausgeführt sein, da diese ja keine eigene Steuerungseinrichtung mehr aufweisen. So könnte bei den anderen Gurtstraffungseinrichtungen beispielsweise auch gänzlich auf ein Gehäuse verzichtet werden, wenn diese lediglich noch die Antriebseinheit umfassen.

In einer weiteren vorteilhaften Ausführungsform des erfindungsgemäßen Gurtstraffungssystems ist für jede Antriebseinheit eine Leistungselektronik vorgesehen. Diese dienen beispielsweise dazu, die entsprechend hohen Ströme für die Antriebseinheit zu verarbeiten.

In einer besonders bevorzugten Ausführungsform des erfindungsgemäßen Gurtstraffungssystems ist jede Leistungselektronik separat von der jeweiligen Antriebseinheit in die Hauptgurtstraffungseinrichtung integriert. Somit ist zwar für jede Antriebseinheit eine Leistungselektronik vorgesehen, diese ist jedoch nicht für jede Gurtstraffungseinrichtung in unmittelbarer Nähe der zugehörigen Antriebseinheit angeordnet. Auf diese Weise können die anderen Gurtstraffungseinrichtungen einen sehr einfachen Aufbau haben, der sich beispielsweise auf die Antriebseinheit reduziert, während die Hauptgurtstraffungseinrichtung etwas größer dimensioniert ist.

In einer vorteilhaften Ausführungsform des erfindungsgemäßen Gurtstraffungssystems ist jede Leistungselektronik in dem Gehäuse der Hauptgurtstraffungseinrichtung angeordnet.

In einer weiteren vorteilhaften, alternativen Ausführungsform des erfindungsgemäßen Gurtstraffungssystems ist die Leistungselektronik jeweils in die zugehörige Gurtstraffungseinrichtung integriert. Im Gegensatz zu der vorhergehenden Ausführungsform sind hier die Wege zwischen den Leistungselektroniken und den zugeordneten Antriebseinheiten kurz, so dass auf eine lange Verkabelung mit starker Abschirmung und hohem Leitungsquerschnitt verzichtet werden kann.

In einer bevorzugten Ausführungsform des erfindungsgemäßen Gurtstraffungssystems erstreckt sich jeweils eine Steuerleitung zwischen der gemeinsamen Steuerungseinrichtung und der jeweiligen Leistungselektronik. Sind Steuerungseinrichtung und Leistungselektronik in einer gemeinsamen Einheit angeordnet, so erübrigt sich eine lange Verkabelung, wobei die Kabel auch nicht so stark gegen äußere Einflüsse abgeschirmt werden müssen.

In einer weiteren bevorzugten Ausführungsform des erfindungsgemäßen Gurtstraffungssystems erstreckt sich jeweils eine Antriebsleitung zwischen den Antriebseinheiten und den zugeordneten Leistungselektroniken. Da derartige Antriebsleitungen auf Grund der hohen Ströme meist einen großen Leitungsquerschnitt haben, kann es vorteilhaft sein, wenn die Wege zwischen Leistungselektronik und Antriebseinheit, wie oben beschrieben, gering sind, da hierdurch eine Platz sparende und günstige Anordnung erzielt werden kann.

In einer weiteren bevorzugten Ausführungsform des erfindungsgemäßen Gurtstraffungssystems umfasst die gemeinsame Steuerungseinrichtung eine Steuerungselektronik mit einem Mikroprozessor.

In einer weiteren bevorzugten Ausführungsform des erfindungsgemäßen Gurtstraffungssystems weist die gemeinsame Steuerungseinrichtung einen CAN-Bus zur Datenübertragung auf.

Das erfindungsgemäße Sicherheitssystem für ein Kraftfahrzeug weist ein Gurtstraffungssystem der zuvor beschriebenen Art auf, wobei das Sicherheitssystem eine übergeordnete Steuerungseinrichtung zur Ansteuerung der gemeinsamen Steuerungseinrichtung des Gurtstraffungssystems sowie mindestens einer anderen Sicherheitseinrichtung aufweist. Auf diese Weise können alle Informationen bezüglich einer bevorstehenden oder bereits akuten Gefahrensituation über eine einzige übergeordnete Steuerungseinrichtung in entsprechende Reaktionen der Sicherheitseinrichtungen umgesetzt werden. Eine Vielzahl verschiedener Steuerungseinrichtungen für jede einzelne Sicherheitseinrichtung ist nicht notwendig. Auf diese Weise kann wiederum auf eine Vielzahl von Bauteilen verzichtet werden, was zu den oben genannten Vorteilen führt.

In einer bevorzugten Ausführungsform des erfindungsgemäßen Sicherheitssystems ist die andere Sicherheitseinrichtung eine Belüftungseinrichtung, eine Sitzverstellungseinrichtung, eine Türöffnungseinrichtung und/oder eine Airbageinrichtung des Kraftfahrzeuges. So könnte beispielsweise im Falle eines Crashs die Belüftung eingeschaltet werden, um durch ein Feuer entstehende Rauschschwaden aus dem Innenraum des Kraftfahrzeuges zu entfernen. Auch könnten hierdurch die Türen automatisch geöffnet bzw. entriegelt werden, wenn es zu einem Unfall gekommen ist. Auch die Sitze könnten unmittelbar vor dem Crash in eine Stellung gebracht werden, in der die Gefahr für den Fahrzeuginsassen verringert ist.

In einer besonders bevorzugten Ausführungsform des erfindungsgemäßen Sicherheitssystems ist die übergeordnete Steuerungseinrichtung eine Airbagsteuerungseinrichtung, eine ESP-Steuerungseinrichtung oder eine separate Steuerungseinrichtung. In den beiden erstgenannten Fällen wird somit eine ohnehin vorhandene Airbagsteuerungseinrichtung bzw. ESP-Steuerungseinrichtung einfach zur Steuerung des Gurtstraffungssystems und anderer Sicherheitseinrichtungen verwendet.

In einer vorteilhaften Ausführungsform des erfindungsgemäßen Sicherheitssystems ist die übergeordnete Steuerungseinrichtung über jeweils einen CAN-Bus mit der Steuerungseinrichtung des Gurtstraffungssystems und den anderen Sicherheitseinrichtungen verbunden.

In einer besonders bevorzugten Ausführungsform des erfindungsgemäßen Sicherheitssystems ist die gemeinsame Steuerungseinrichtung in die übergeordnete Steuerungseinrichtung integriert. Dies bedeutet, dass die übergeordnete und die gemeinsame Steuerungseinrichtung eine einheitliche Steuerungseinrichtung ausbilden.

Die Erfindung wird im Folgenden anhand zweier beispielhafter Ausführungsformen unter Bezugnahme auf die zugehörigen Zeichnungen näher erläutert. Es zeigen:
- Fig. 1: eine schematische Darstellung einer ersten Ausführungsform des erfindungsgemäßen Gurtstraffungssystems in einem Sicherheitssystem für ein Kraftfahrzeug und
- Fig. 2: eine schematische Darstellung einer zweiten Ausführungsform des erfindungsgemäßen Gurtstraffungssystems in einem Sicherheitssystem für ein Kraftfahrzeug.

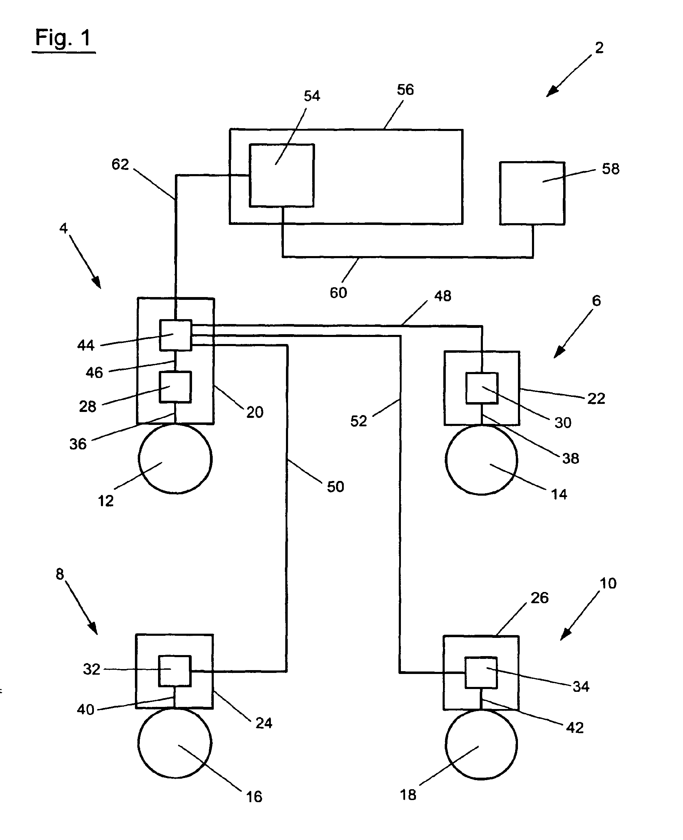

Fig. 1 zeigt eine erste Ausführungsform eines Sicherheitssystems 2 für ein Kraftfahrzeug. Ein Gurtstraffungssystem ist als Teil des Sicherheitssystems 2 ausgebildet und umfasst vier separate Gurtstraffungseinrichtungen 4, 6, 8, 10. Unter separat ist hierbei zu verstehen, dass die Gurtstraffungseinrichtungen 4, 6, 8, 10 voneinander beabstandet jeweils einem nicht näher dargestellten separaten Sicherheitsgurt zugeordnet sind. Dabei ist die Gurtstraffungseinrichtung 4 dem Sicherheitsgurt des Fahrers, die Gurtstraffungseinrichtung 6 dem Sicherheitsgurt des Beifahrers, die Gurtstraffungseinrichtung 8 dem Sicherheitsgurt des hinteren linken Rücksitzes und die Gurtstraffungseinrichtung 10 dem Sicherheitsgurt des hinteren rechten Rücksitzes des Kraftfahrzeuges zugeordnet. Die Gurtstraffungseinrichtungen 4, 6, 8, 10 dienen der reversiblen Straffung der genannten Sicherheitsgurte im Falle einer ermittelten Gefahrensituation.

Jede Gurtstraffungseinrichtung 4, 6, 8, 10 weist einen elektrischen Motor 12, 14, 16, 18 zur Straffung des Sicherheitsgurtes und ein Gehäuse 20, 22, 24, 26 auf, das an dem elektrischen Motor 12, 14, 16, 18 angeordnet ist. Ferner ist in jedem Gehäuse 20, 22, 24, 26 eine dem entsprechenden elektrischen Motor 12, 14, 16, 18 zugeordnete Leistungselektronik 28, 30, 32, 34 untergebracht. Die Leistungselektronik 28, 30, 32, 34 steht über eine Antriebsleitung 36, 38, 40, 42 mit dem ihr zugeordneten elektrischen Motor 12, 14, 16, 18 in Verbindung. Jede Gurtstraffungseinrichtung 4, 6, 8, 10 ist ferner mit einer nicht dargestellten Stromquelle verbunden.

In dem Gehäuse 20 der Gurtstraffungseinrichtung 4, die nachstehend auch als Hauptgurtstraffungseinrichtung 4 bezeichnet wird, ist ferner eine gemeinsame Steuerungseinrichtung 44 vorgesehen, die der Ansteuerung jeder einzelnen Leistungselektronik 28, 30, 32, 34 dient. Zu diesem Zweck steht die gemeinsame Steuerungseinrichtung 44 über die Steuerleitung 46, 48, 50 bzw. 52 mit der Leistungselektronik 28, 30, 32 bzw. 34 in Verbindung. Die gemeinsame Steuerungseinrichtung 44 umfasst eine Steuerungselektronik mit einem Mikroprozessor. Mit Hilfe der Steuerungseinrichtung 44 wird der Auslösealgorithmus und die Ablaufsteuerung 54 durchgeführt.

Das Sicherheitssystem 2 weist ferner eine übergeordnete Steuerungseinrichtung 54. Bei der übergeordneten Steuerungseinrichtung 54 handelt es sich um eine bereits in eine andere Sicherheitseinrichtung 56 integrierte Steuerungseinrichtung, wie beispielsweise eine Airbagsteuerungseinrichtung oder eine ESP-Steuerungseinrichtung. Allerdings ist es grundsätzlich möglich, dass es sich bei der übergeordneten Steuerungseinrichtung 54 auch um eine separate Sicherheitseinrichtung handelt, die nicht in eine Sicherheitseinrichtung 56 integriert ist. Die übergeordnete Steuerungseinrichtung 54 dient sowohl der Ansteuerung der Sicherheitseinrichtung 56 als auch der Ansteuerung weiterer Sicherheitseinrichtungen 58, wie dies in Fig. 1 an Hand der Steuerleitung 60 angedeutet ist. Bei diesen weiteren Sicherheitseinrichtungen 58 kann es sich beispielsweise um eine Belüftungseinrichtung, eine Sitzverstellungseinrichtung, eine Türöffnungseinrichtung und/oder eine Airbageinrichtung des Kraftfahrzeuges handeln.

Des Weiteren dient die übergeordnete Steuerungseinrichtung 54 der Ansteuerung des Gurtsstraffungssystems und steht zu diesem Zweck über einen CAN-Bus mit der gemeinsamen Steuerungseinrichtung 44 des Gurtstraffungssystems in Verbindung. Auch bei den Steuerleitungen 60, die zu den anderen Sicherheitseinrichtungen 58 führen, sollte es sich vorzugsweise um einen CAN-Bus handeln.

Wie aus Fig. 1 selbst bei schematischer Darstellung hervorgeht, können die Gehäuse der Gurtstraffungseinrichtungen 22, 24, 26 sehr klein ausgeführt werden, da in diesen keine zusätzliche Steuerungseinrichtung untergebracht werden muss. Lediglich im Gehäuse 20 der Hauptgurtstraffungseinrichtung 4 muss mehr Innenraum zur Verfügung stehen, um die gemeinsame Steuerungseinrichtung 44 aufzunehmen.

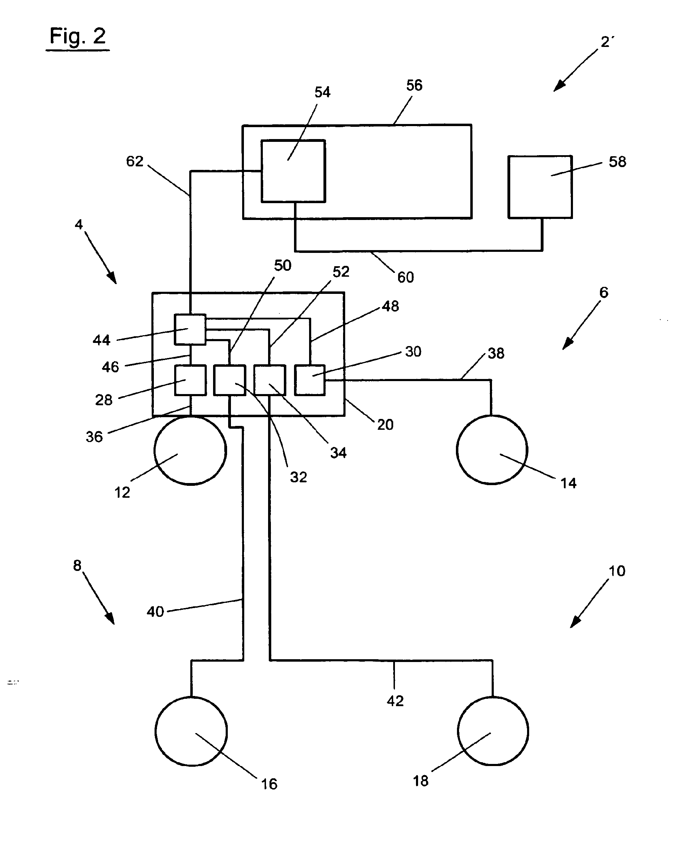

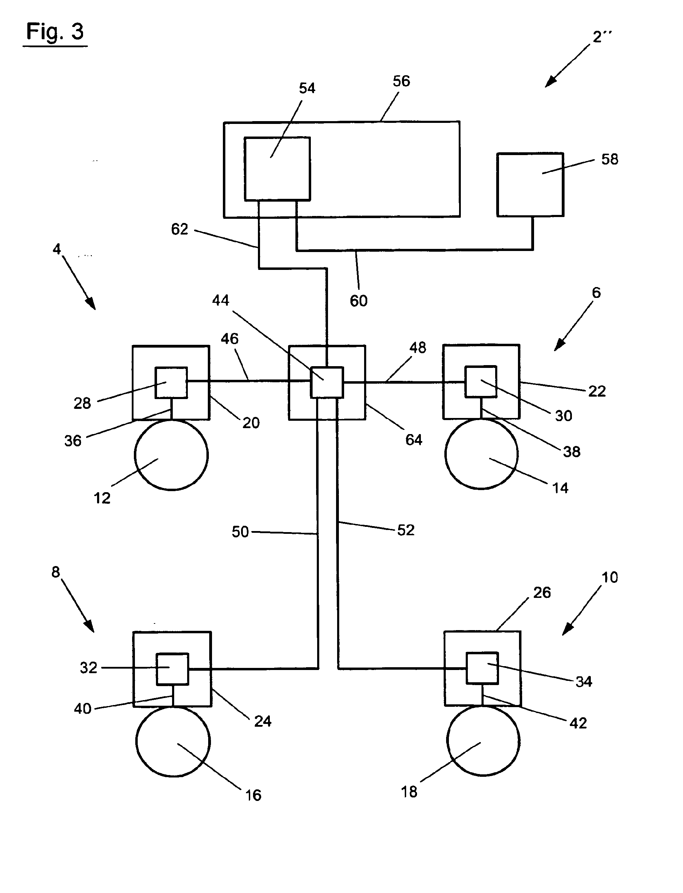

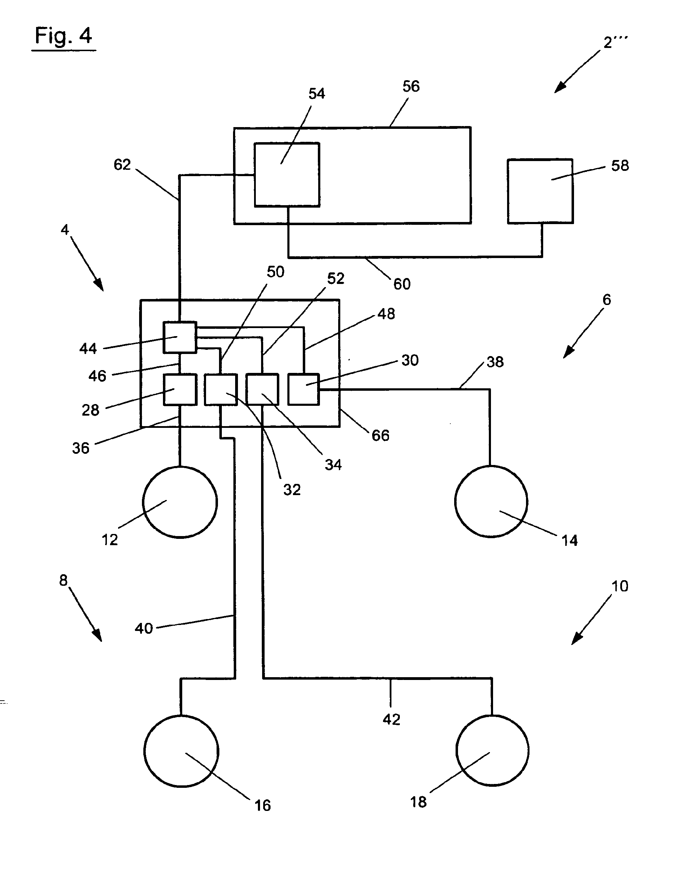

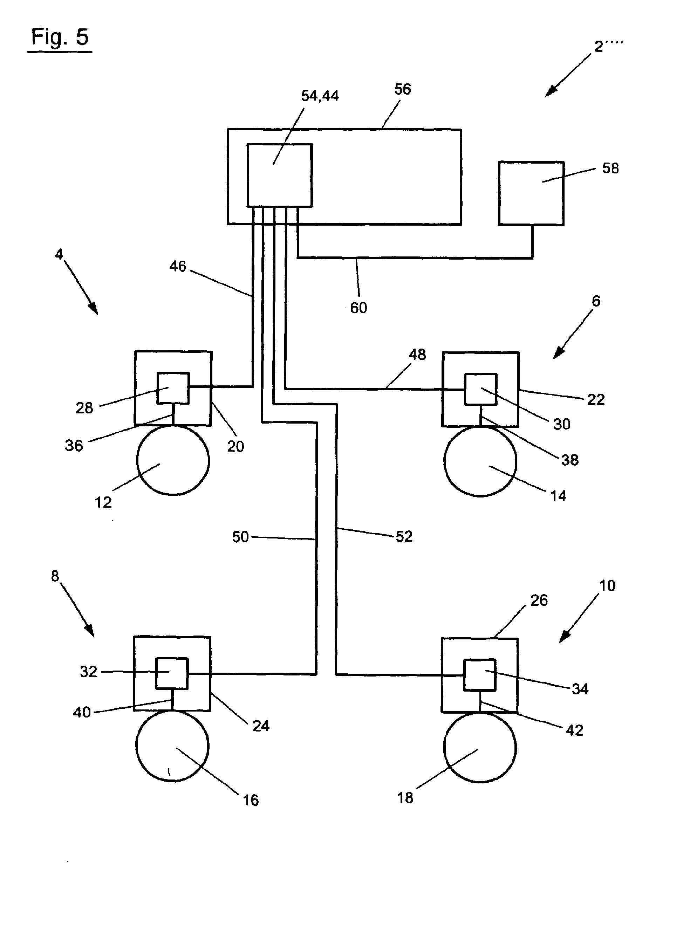

Fig. 2 zeigt eine zweite Ausführungsform eines Sicherheitssystems 2'. Das Sicherheitssystem 2' entspricht zum Großteil dem Sicherheitssystem 2 von Fig. 1, so dass nachstehend lediglich auf die Unterschiede eingegangen werden soll, während ansonsten die obige Beschreibung entsprechend gilt.

Bei dem Sicherheitssystem 2' ist die Leistungselektronik 28, 30, 32, 34 für jeden elektrischen Motor 12, 14, 16, 18 in dem Gehäuse 20 der Hauptgurtstraffungseinrichtung 4 angeordnet. Demzufolge kann bei den anderen Gurtstraffungseinrichtungen 6, 8, 10, die nunmehr im Wesentlichen nur noch aus dem elektrischen Motor 14, 16, 18 bestehen, auf die Gehäuse 22, 24, 26 (siehe Fig. 1) verzichtet werden. Zwar muss nunmehr das Gehäuse 20 größer ausgelegt sein, allerdings sind die anderen Gurtstraffungseinrichtungen 6, 8, 10 sehr klein dimensioniert, so dass deren Unterbringung im Kraftfahrzeug vereinfacht ist.

### neue Bezugszeichenliste

- 2,2': Sicherheitssysteme
- 4: (Haupt-)Gurtstraffungseinrichtung
- 6,8,10: Gurtstraffungseinrichtungen
- 12,14,16,18: elektrische Motoren
- 20,22,24,26: Gehäuse
- 28,30,32,34: Leistungselektronik
- 36,38,40,42: Antriebsleitung
- 44: gemeinsame Steuerungseinrichtung
- 46,48,50,52: Steuerleitung
- 54: übergeordnete Steuerungseinrichtung
- 56,58: Sicherheitseinrichtungen
- 60: Steuerleitung
- 62: CAN-Bus

## Patentansprüche

1. Gurtstraffungssystem für ein Kraftfahrzeug mit mindestens zwei separaten Gurtstraffungseinrichtungen (4, 6, 8, 10) zur reversiblen Straffung separater Sicherheitsgurte, wobei die Gurtstraffungseinrichtungen (4, 6, 8, 10) jeweils eine Antriebseinheit (12, 14, 16, 18) aufweisen und eine gemeinsame Steuerungseinrichtung (44) für die mindestens zwei Gurtstraffungseinrichtungen (4, 6, 8, 10) vorgesehen ist, **dadurch gekennzeichnet, dass** die gemeinsame Steuerungseinrichtung (44) in eine Hauptgurtstraffungseinrichtung (4) integriert ist, wobei die Hauptgurtstraffungseinrichtung (4) eine der Gurtstraffungseinrichtungen (4, 6, 8, 10) ist.

2. Gurtstraffungssystem nach Anspruch 1, **dadurch gekennzeichnet, dass** die Hauptgurtstraffungseinrichtung (4) ein Gehäuse (20) aufweist, wobei die gemeinsame Steuerungseinrichtung (44) in dem Gehäuse (20) angeordnet ist.

3. Gurtstraffungssystem nach einem der Ansprüche 1 oder 2, **dadurch gekennzeichnet, dass** für jede Antriebseinheit (12, 14, 16, 18) eine Leistungselektronik (28, 30, 32, 34) vorgesehen ist.

4. Gurtstraffungssystem nach Anspruch 3, **dadurch gekennzeichnet, dass** jede Leistungselektronik (28, 30, 32, 34) separat von der jeweiligen Antriebseinheit (12, 14, 16, 18) in die Hauptgurtstraffungseinrichtung (4) integriert ist.

5. Gurtstraffungssystem nach Anspruch 4, **dadurch gekennzeichnet, dass** jede Leistungselektronik (28, 30, 32, 34) in dem Gehäuse (20) der Hauptgurtstraffungseinrichtung (4) angeordnet ist.

6. Gurtstraffungssystem nach Anspruch 5, **dadurch gekennzeichnet, dass** die Leistungselektronik (28, 30, 32, 34) jeweils in die zugehörige Gurtstraffungseinrichtung (4, 6, 8, 10) integriert ist.

7. Gurtstraffungssystem nach einem der Ansprüche 3 bis 6, **dadurch gekennzeichnet, dass** sich jeweils eine Steuerleitung (46, 48, 50, 52) zwischen der gemeinsamen Steuerungseinrichtung (44) und der jeweiligen Leistungselektronik (28, 30, 32, 34) erstreckt.

8. Gurtstraffungssystem nach Anspruch 7, **dadurch gekennzeichnet, dass** sich jeweils eine Antriebsleitung (36, 38, 40, 42) zwischen den Antriebseinheiten (12, 14, 16, 18) und den zugeordneten Leistungselektroniken (28, 30, 32, 34) erstreckt.

9. Gurtstraffungssystem nach einem der vorangehenden Ansprüche, **dadurch gekennzeichnet, dass** die gemeinsame Steuerungseinrichtung (44) eine Steuerungselektronik mit einem Mikroprozessor umfasst.

10. Gurtstraffungssystem nach einem der vorangehenden Ansprüche, **dadurch gekennzeichnet, dass** die gemeinsame Steuerungseinrichtung (44) einen CAN-Bus (62) zur Datenübertragung aufweist.

11. Sicherheitssystem für ein Kraftfahrzeug mit einem Gurtstraffungssystem nach einem der vorangehenden Ansprüche, wobei das Sicherheitssystem eine übergeordnete Steuerungseinrichtung (54) zur Ansteuerung der gemeinsamen Steuerungseinrichtung (44) des Gurtstraffungssystems sowie mindestens einer anderen Sicherheitseinrichtung (56, 58) aufweist.

12. Sicherheitssystem nach Anspruch 11, **dadurch gekennzeichnet, dass** die andere Sicherheitseinrichtung (56, 58) eine Belüftungseinrichtung, eine Sitzverstellungseinrichtung, eine Türöffnungseinrichtung und/oder eine Airbageinrichtung des Kraftfahrzeuges ist.

13. Sicherheitssystem nach einem der Ansprüche 11 oder 12, **dadurch gekennzeichnet, dass** die übergeordnete Steuerungseinrichtung (54) eine Airbagsteuerungseinrichtung, eine ESP-Steuerungseinrichtung oder eine separate Steuerungseinrichtung ist.

14. Sicherheitssystem nach einem der Ansprüche 11 bis 13, **dadurch gekennzeichnet, dass** die übergeordnete Steuerungseinrichtung (54) über jeweils einen CAN-Bus (62) mit der gemeinsamen Steuerungseinrichtung (44) des Gurtstraffungssystems und/oder den anderen Sicherheitseinrichtungen (58) verbunden ist.

15. Sicherheitssystem nach einem der Ansprüche 11 bis 14, **dadurch gekennzeichnet, dass** die gemeinsame Steuerungseinrichtung (44) in die übergeordnete Steuerungseinrichtung (54) integriert ist.

## Claims

1. Belt tightening system for a motor vehicle with at least two separate belt tightening means (4, 6, 8, 10) for the reversible tightening of separate safety belts, the belt tightening means (4, 6, 8, 10) having in each case a drive unit (12, 14, 16, 18) and a common control means (44) being provided for the at least two belt tightening means (4, 6, 8, 10), **characterised in that** the common control means (44) is integrated into a main belt tightening means (4), the main belt tightening means (4) being one of the belt tightening means (4, 6, 8, 10).

2. Belt tightening system according to claim 1, **characterised in that** the main belt tightening means (4) has a housing (20), the common control means (44) being arranged in the housing (20).

3. Belt tightening system according to one of claims 1 or 2, **characterised in that** a power electronics unit (28, 30, 32, 34) is provided for each drive unit (12, 14, 16, 18).

4. Belt tightening system according to claim 3, **characterised in that** each power electronics unit (28, 30, 32, 34) is integrated into the main belt tightening means (4) separately from the respective drive unit (12, 14, 16, 18).

5. Belt tightening system according to claim 4, **characterised in that** each power electronics unit (28, 30, 32, 34) is arranged in the housing (20) of the main belt tightening means (4).

6. Belt tightening system according to claim 5, **characterised in that** the power electronics unit (28, 30, 32, 34) is integrated in each case into the associated belt tightening means (4, 6, 8, 10).

7. Belt tightening system according to one of claims 3 to 6, **characterised in that** in each case a control line (46, 48, 50, 52) extends between the common control means (44) and the respective power electronics unit (28, 30, 32, 34).

8. Belt tightening system according to claim 7, **characterised in that** in each case a drive line (36, 38, 40, 42) extends between the drive units (12, 14, 16, 18) and the associated power electronics unit (28, 30, 32, 34).

9. Belt tightening system according to one of the preceding claims, **characterised in that** the common control means (44) comprises a control electronics unit with a microprocessor.

10. Belt tightening system according to one of the preceding claims, **characterised in that** the common control means (44) has a CAN bus (62) for data transmission.

11. Safety system for a motor vehicle with a belt tightening system according to one of the preceding claims, wherein the safety system has a superordinate control means (54) for activating the common control means (44) of the belt tightening system and also at least one other safety means (56, 58).

12. Safety system according to claim 11, **characterised in that** the other safety means (56, 58) is a ventilation means, a seat adjustment means, a door opening means and/or an air bag means of the motor vehicle.

13. Safety system according to one of claims 11 or 12, **characterised in that** the superordinate control means (54) is an air bag control means, an ESP control means or a separate control means.

14. Safety system according to one of claims 11 to 13, **characterised in that** the superordinate control means (54) is connected to the common control means (44) of the belt tightening system and/or the other safety means (58) via in each case a CAN bus (62).

15. Safety system according to one of claims 11 to 14, **characterised in that** the common control means (44) is integrated into the superordinate control means (54).

## Revendications

1. Système de tendeur de ceinture pour un véhicule à moteur avec au moins deux dispositifs de tendeur de ceinture (4, 6, 8, 10) séparés pour la mise en tension réversible de ceintures de sécurité séparées, dans lequel les dispositifs de tendeur de ceinture (4, 6, 8, 10) possèdent chacun une unité d'entraînement (12, 14, 16, 18) et il est prévu un dispositif de commande (44) commun aux au moins deux dispositifs de tendeur de ceinture (4, 6, 8, 10), **caractérisé en ce que** le dispositif de commande commun (44) est intégré dans un dispositif de tendeur de ceinture principal (4), lequel dispositif de tendeur de ceinture principal (4) est l'un des dispositifs de tendeur de ceinture (4, 6, 8, 10).

2. Système de tendeur de ceinture selon la revendication 1, **caractérisé en ce que** le dispositif de tendeur de ceinture principal (4) présente un boîtier (20), le dispositif de commande commun (44) étant disposé dans le boîtier (20).

3. Système de tendeur de ceinture selon l'une des revendications 1 ou 2, **caractérisé en ce qu'**il est prévu pour chaque unité d'entraînement (12, 14, 16, 18) un circuit électronique de puissance (28, 30, 32, 34).

4. Système de tendeur de ceinture selon la revendication 3, **caractérisé en ce que** chaque circuit électronique de puissance (28, 30, 32, 34) est intégré séparément par l'unité d'entraînement (12, 14, 16, 18) correspondante dans le dispositif de tendeur de ceinture principal (4).

5. Système de tendeur de ceinture selon la revendication 4, **caractérisé en ce que** chaque circuit électronique de puissance (28, 30, 32, 34) est disposé dans le boîtier (20) du dispositif de tendeur de ceinture principal (4).

6. Système de tendeur de ceinture selon la revendication 5, **caractérisé en ce que** chaque circuit électronique de puissance (28, 30, 32, 34) est intégré dans le dispositif de tendeur de ceinture (4, 6, 8, 10) correspondant.

7. Système de tendeur de ceinture selon l'une des revendications 3 à 6, **caractérisé en ce qu'**une ligne de commande (46, 48, 50, 52) s'étend entre le dispositif de commande commun (44) et chaque circuit électronique de puissance (28, 30, 32, 34).

8. Système de tendeur de ceinture selon la revendication 7, **caractérisé en ce qu'**une ligne d'entraînement (36, 38, 40, 42) s'étend entre les unités d'entraînement (12, 14, 16, 18) et les circuits électroniques de puissance (28, 30, 32, 34) correspondants.

9. Système de tendeur de ceinture selon une des revendications précédentes, **caractérisé en ce que** le dispositif de commande commun (44) comprend un circuit électronique de commande avec un microprocesseur.

10. Système de tendeur de ceinture selon l'une des revendications précédentes, **caractérisé en ce que** le dispositif de commande commun (44) comprend un bus CAN-Bus (62) pour la transmission de données.

11. Système de sécurité pour un véhicule à moteur avec un système de tendeur de ceinture selon une des revendications précédentes, lequel système de sécurité comprend un dispositif de commande supérieur (54) pour l'activation du dispositif de commande commun (44) du système de tendeur de ceinture et au moins un autre dispositif de sécurité (56,58).

12. Système de sécurité selon la revendication 11, **caractérisé en ce que** l'autre dispositif de sécurité (56, 58) est un dispositif de ventilation, un dispositif de réglage du siège, un dispositif d'ouverture de porte et/ou un dispositif de coussin gonflable de sécurité du véhicule à moteur.

13. Système de sécurité selon l'une des revendications 11 ou 12, **caractérisé en ce que** le dispositif de commande supérieur (54) est un dispositif de commande de coussin gonflable de sécurité, un dispositif de contrôlé électronique de la stabilité (ESP) ou un dispositif de commande séparé.

14. Système de sécurité selon l'une des revendications 11 à 13, **caractérisé en ce que** le dispositif de commande supérieur (54) communique par un bus CAN-Bus (62) avec le dispositif de commande commun (44) du système de tendeur de ceinture et/ou avec les autres dispositifs de sécurité (58).

15. Système de sécurité selon l'une des revendications 11 à 14, **caractérisé en ce que** le dispositif de commande commun (44) est intégré dans le dispositif de commande supérieur (54).
